# EUROPEAN PATENT SPECIFICATION

(11) **EP 3 519 269 B1**
(45) Date of publication and mention of the grant of the patent: **25.08.2021**
(21) Application number: 17804283.4
(22) Date of filing: 29.09.2017
(51) Int. Cl.: B61D 15/12, G01M 17/08

(54) **SELF-PROPELLED APPARATUS FOR ON-CONDITION INSPECTION AND MAINTENANCE OF THE UNDERBODY OF A TRAIN**
SELBSTFAHRENDE VORRICHTUNG ZUR ZUSTANDSABHÄNGIGEN KONTROLLE UND WARTUNG DES UNTERBODENS EINES ZUGES
APPAREIL AUTOMOTEUR POUR L'INSPECTION ET LA MAINTENANCE SELON L'ÉTAT DU DESSOUS DE CAISSE D'UN TRAIN

(30) Priority: 29.09.2016 IT 201600098012
(43) Date of publication of application: 07.08.2019
(73) Proprietor: Scuola Superiore di Studi Universitari e di Perfezionamento Sant'Anna, 56127 Pisa (IT); Trenitalia S.p.A., 00161 Roma (IT)
(72) Inventor: MANNO, Vincenzo, 56127 Pisa (IT); SOLAZZI, Massimiliano, 56127 Pisa (IT); BERGAMASCO, Massimo, 00161 Roma (IT); ROMANO, Francesco, 00161 Roma (IT); BONACCI, Giuseppe, 00161 Roma (IT); FRISOLI, Antonio, 56127 Pisa (IT); LOCONSOLE, Claudio, 56127 Pisa (IT); MASINI, Paolo, 00161 Roma (IT); COCCHETTI, Francesco, 00161 Roma (IT)
(74) Representative: Leotta, Antonio
(86) International application number: PCT/IB2017/056006
(87) International publication number: WO 2018/060945

(56) References cited:
- WO-A2-00/05120
- CN-A- 105 882 683
- JP-A- S5 467 913

## Description

### Technical Field

The present invention relates to the technical sector of the trains underbody inspection apparatus, in particular self-propelled and automated apparatus.

### State of the Art

Safety is nowadays a key issue for rail transport, especially with the increasingly massive introduction of high speed (HS).

The core issue of ordinary maintenance activities on rail vehicles is the proper inspection of the underbody - with particular attention to all aspects of the braking system - in order to always ensure a high level of braking of the rolling stock under any service and composition condition that could be. Specifically, the underbody inspection of a rolling stock must be able to identify the integrity of the visible mechanical parts, distinguishing between:
- suitable parts;
- damaged parts requiring replacement (more or less urgent);
- worn parts, with an estimation of the times after which a replacement operation is required.

When required by the Maintenance Plan, the underbody inspections are carried out manually inside working trenches, where the crew must operate in strictly observance of general safety and internal working site rules as well as the need to unpower the overhead line before starting any activity and ensuring the complete lack of power supply of the seizures and their related safety grounding: it remains clear how such processes can entail injuries risks to the workers.

Preventive maintenance often has some limitations: if the latter is effective both in economic terms and in reducing the unavailability of the machine when the failure has a certain regularity of occurrence, on the other hand it is not convenient to apply scheduled maintenance techniques to a failure difficult to predict. In addition, the maintenance performed directly by the operator implies a series of risks and disadvantages, such as:
- subjectivity in measure and transcription;
- risks related to the issue of worker safety;
- possible oversights and failures related to human error;
- costs and time for staff training.

To these, it should be added that, as soon as the system to be monitored grows in size and complexity, the need for more efficient and objective methodologies arises.

A particularly efficient maintenance methodology in the specific case would be the on condition one. It is not a small matter to understand how to carry out an on condition maintenance in the underbody of a train.

An advantageous approach is the use of a vision/acquisition system and, possibly, of other types of sensors that can be moved to reach the underbody of trains in order to integrate and eventually replace some of the functions currently performed by "humans".

The resulting benefits are summarized in three key words:
- automation, which allows you to speed up the time for this task, making it automatic or semi-automatic;
- flexibility, allowing you to perform multiple measurements at the same time;
- objectivity of the measurement, which guarantees high performance and eliminates errors during measurements and the relative data transcriptions, as well as a high repeatability of the measurement performed.

To automatically support and manipulate sensors including vision/capture systems, robotized arms are used in many sectors.

Autonomous and teleoperated robots are widely used in a variety of areas including the rail sector. For example, in the railway infrastructure sector, exchanges are extremely critical and complex, and the infrastructure manager carries out regular measurement campaigns in order to check the status with manual elements or diagnostic wagons. A self-propelled apparatus for the inspection of trains underbody is known from CN 105 882 683 A.

In any case, in order to carry out the inspection of the trains underbody using a sensorized robotic arm, the latter must be able to be moved properly.

The aforementioned diagnostic wagons can easily use the rails by means of rollers suitably shaped with ribs, just like those which constitute the assembled rolls of a real train. Such diagnostic systems, however, can only work if there is no train on the tracks during their use, while in the case of an underbody inspection robot the presence of the train is required.

It is therefore important to look for solutions that allow the movement of a sensorized robotic arm or other diagnostic device along a rail with the presence of the train on it so that it can access the various sections of its underbody.

### Summary of Invention

The object of the present invention is to solve the problems of the prior art and to propose an apparatus which allows a platform to move parallel to the rails in the space between the latter and below the rolling plane, taking into account all the constraints imposed by the presence of a train and by the variability of the components that constitute the railway armament.

Another object of the present invention is to propose an apparatus that allows the mounting on the platform of a robotic inspection system of the underbody in order to allow the operator to remotely view the train underbody by controlling the position and orientation of an "on board" vision system.

The above said objects are achieved by means of a self-propelled apparatus for the inspection of the underbody of trains according to claim 1.

Advantageously, the first rolling bodies get in contact with the tracks upper splint plans.

Advantageously, the support arms of the rolling bodies of the active group extend, one by rolling body, externally and orthogonally to the longitudinal platform surfaces, at least two of them located near the front far end of the platform, on opposite sides, at least two of them located near the back far end of the platform, on opposite sides, and contained within the vertical displacement of the platform.

Still advantageously, the first support arms comprise a guide portion integral with the platform and a sliding portion slidably associated with the guide portion. Between the guide portion and the sliding portion there is at least one elastic body arranged to press the sliding portion outwardly with respect to the platform and between the guide portion and the elastic body are provided adjustment members of the preload of the elastic body itself.

Advantageously, the self-propelled apparatus comprises at least one motor-reducer group associated with at least one of the rolling bodies of the active group by means of flexible motion transmission organs.

Still advantageously, the second support arms are dimensioned to support the platform weight and have a U-shaped conformation with downward opening.

Still advantageously, the connecting organs of the second support arms allow the rotation of the second support arms around the vertical axis passing through the connecting organs themselves.

Advantageously, the second rolling bodies are positioned vertically with a negative camber.

Still advantageously the self-propelled apparatus comprises a vision system associated with a robot arm bound to the platform in transversal sliding mode.

Advantageously, the robotic arm is bound to slide along a guide, fixed horizontally and transversely to one side of the platform, having the vertical displacement contained within the vertical displacement of the platform.

### Brief Description of Drawings

These and other features of the invention will become more easily understandable from the following description of embodiments thereof provided as non-limiting examples with reference to the attached drawings in which:
- Fig. 1 shows a perspective view of an apparatus according to the invention;
- Fig. 2 shows a perspective view of the apparatus of Fig. 1 in a use configuration associated with a rail;
- Fig. 3 shows a partial section view of a portion of the apparatus of Fig. 2 depicting a relative active group;
- Fig. 4 shows a partial section view of a portion of the apparatus of Fig. 2 depicting a relative passive group;
- Fig. 5 shows a schematic top view of the platform of Fig. 1

### Description of Embodiments

In the following description of the embodiments, reference is always made, for simplicity, to the right, left, front and rear localization in relation to the direction of forward motion of a rail to which the apparatus of the invention is associated.

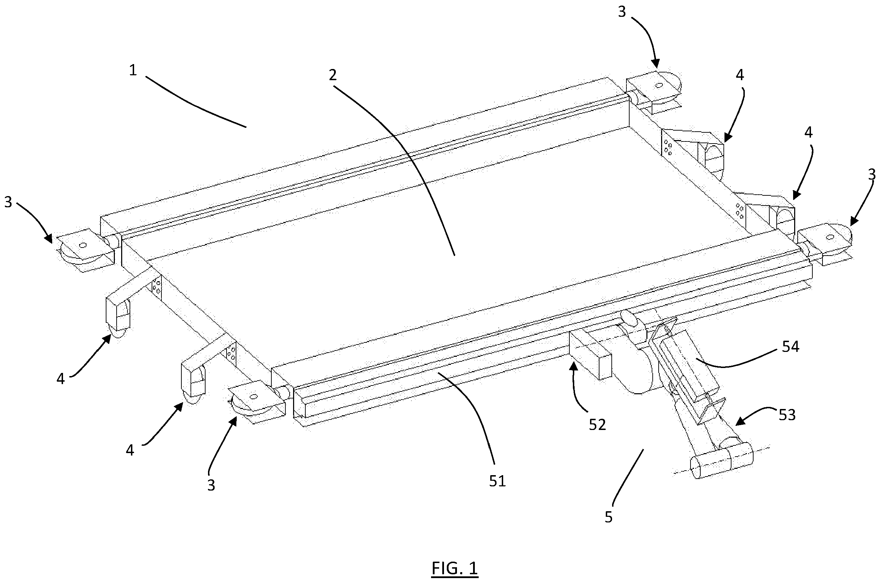

With reference to Fig. 1, a preferred embodiment of the self-propelled apparatus, 1, object of the invention, comprises a platform, 2, an active group, 3, a passive group, 4, and a robotic arm, 5.

The platform 2 has a substantially rectangular shape and very small vertical displacement in relation to its two main dimensions. Also referring to the embodiment of Fig. 1, it comprises a thin, rectangular, metal plate perimetrically enclosed by thin metal plates arranged vertically on its long side, having the longest side dimension coincident with the dimension of the side of the central plate to which they are individually joined and having the smallest dimension limited in order to give to the entire structure of platform 2 an equally limited vertical displacement. Specifically, the vertical displacement of the platform 2 is smaller than the rail height, preferably about half the height of the rail, which in absolute terms means a height smaller than 170 mm, preferably included between 40 mm and 100 mm.

Below, it is referred to the right and left longitudinal surfaces as to the perimeter surfaces of platform 2 parallel to the track forward direction and it is referred to the front and rear transverse surfaces as to the perimetral surfaces orthogonal to the track forward direction.

Also with reference to the embodiment of Fig. 1, to the front and rear transverse surfaces of platform 2 are joined thin U-shaped metal profiles by coupling the vertical plates on these sides of the platform with one of the two symmetric bars of the U-shaped profile, of identical dimensions to the same vertical plate, in order to keep the opening U downwardly.

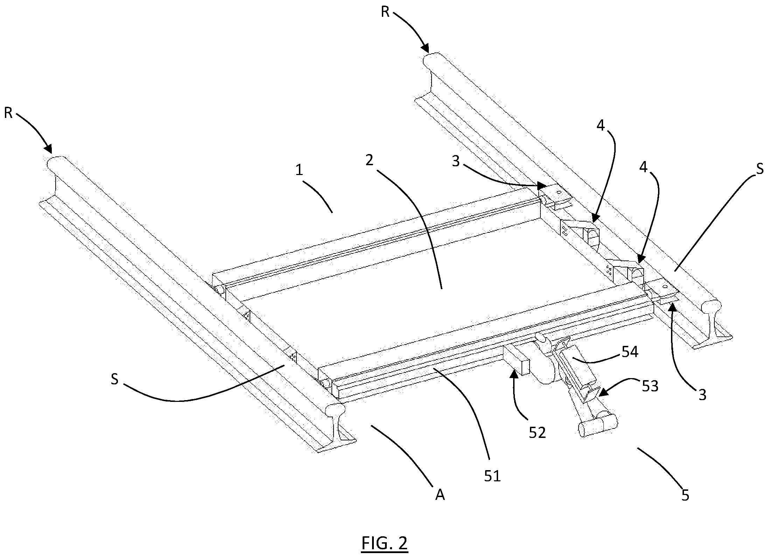

With reference to Fig. 2, the apparatus of the invention is predisposed to be associated with a rail so that the platform 2 can slide along its rails, R, thanks to the engine work of the active group 3 and the static support of the passive group 4. Solidly to the platform 2 also runs the robotic inspection system 5, ensuring the complete coverage of the space between the rails.

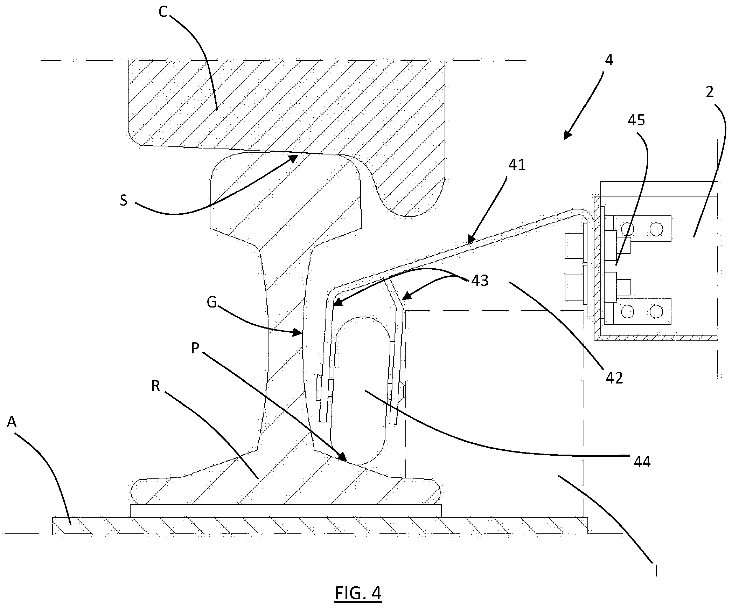

With reference to Fig. 4, the rail R is fixed on an advancement plane A by fixing members (not shown) having a maximum displacement I. On the rolling surface S of the rail R insist the wheels of a train, C. The passive group 4, as shown in Fig. 4, is composed of a support arm 41, an end shaped as a fork, 43, of the same arm 41, a rolling body 44, and connecting organs, 45.

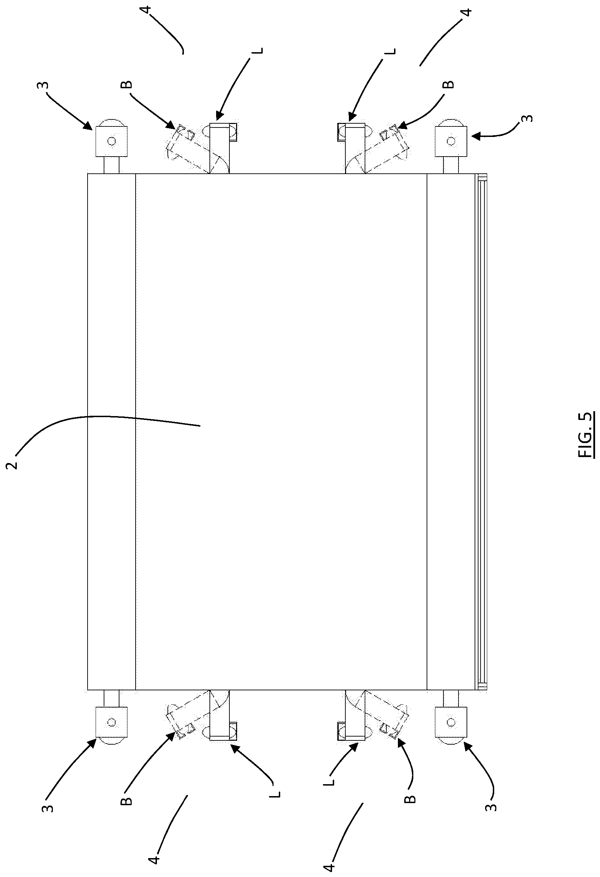

The passive group 4 is associated with the platform 2 so that a relative rolling body 44 rolls along the lower splint plane P of the rail R and at the same time the rolling body 44 is mounted in a freely rotatable mode on a support arm 41 made of a thin profile shaped in a substantially U-form with an opening 42 facing downward and with one of its end shaped as a fork 43. Between the prongs of that fork 43 is contained the rolling body 44, fixed to it in freely rotating mode around its rotation axis. The shape of the support arm 41 is such that the rolling body 44 is disposed with substantially horizontal rotation axis with negative camber to maximize the safety coefficient aimed at avoiding any kind of impact against obstacles potentially present along the trajectory. The support arm 41 is attached by its other end to the platform 2 via the connecting organs 45. Such connecting organs 45, as seen in Fig. 5, fasten the support arm 41 in a modality, of known art, which allows a configuration in which the passive group is integral with the platform in order to extend itself transversely and rigidly from it, and a hinge connection configuration in order to allow the entire passive group 4 to rotate around a vertical axis and temporarily limit its transverse displacement with respect to the outer profile of platform 2. The above said selectively-actionable hinge connection configuration allows an easy insertion of the apparatus on the rail R. Still with reference to the embodiment of Fig. 5, there is shown a first "working" mode L in which all passive groups 4 are fixed orthogonally to the longitudinal surfaces of platform 2, and a second "installation" mode B (dashed) in which all passive groups 4 are rotated with respect to the "working" mode in order to reduce the overall transverse dimensions of the apparatus. The passive group 4 has the previously defined arched "U"-shape that holds the platform 2 to a height such that it is substantially facing the upper portion of the shank G of the rail R. Also, the arched shape is useful in avoiding the possible interference with the rail fixing members schematically represented by the displacement profile I.

The optimal planar distribution of the passive groups 4 with respect to the platform 2, as evidenced by the embodiment of Figures 1 and 5, is that one in which they are located at least two on the left longitudinal surface and at least two on the right longitudinal surface of the platform 2, symmetrical with respect to to the transverse central axis of the same in order to prevent slippage effects during sliding. The above said configuration and arrangement of the passive groups 4 allows the relative rolling bodies 44 to roll on the lower splint plane P of the two rails R by supporting the platform between the rails themselves at the height of the upper zone of the shank G and in any case with displacements in height fully contained in those of the rail R.

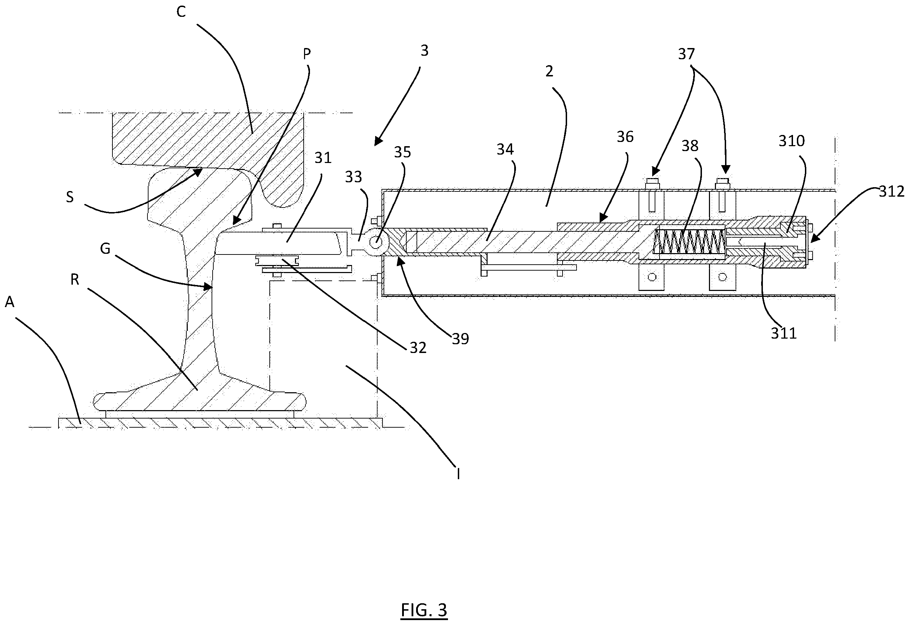

With reference to Fig. 3, along the inner profile of the shank G, in correspondance with its upper end, insists the active group 3 which is associated with platform 2. This active group 3, positioned horizontally and contained within the vertical displacement of the platform 2, comprises: a rolling body, 31, a pulley, 32, a support arm, 33, a sliding portion, 34, a support unit, 39, of the sliding portion 34, connecting organs, 35, of the sliding portion 34 to the support unit 39, guide portion, 36, fixing organs, 37, of the guide portion 36 to the platform 2, an elastic body, 38, a hollow stopper, 310, contained within the guide portion 36, a sliding screw, 311, and adjustment members of the preload, 312.

On the inner profile of the shank G of the rail R, insists and rolls the rolling body 31 of the active group 3. This rolling body 31 is supported, in freely rotatable mode, with vertical rotation axis coaxial to the pulley 32, which is disposed side by side with the rolling body 31, between the prongs of the support arm 33, shaped as a fork. The support arm 33 is as well integral with the support unit 39 of the sliding portion 34 through the rigid connection organs 35. The sliding portion 34 is guided to slide transversely from the fixed guide portion 36, tubular in shape, within which it is partially housed. The elastic body 38 is interposed between an end of the sliding portion 34 and a rear stopper 310 of the fixed guide portion 36 and it is, by that, pushed horizontally and externally with respect to the profile of the platform 2 in order to maintain the rolling body 31 in contact with the rail R. The elastic body 38 is held loaded against the sliding portion 34 by the adjustment members of the preload 312 so that the preload of the elastic body 38 can be adjusted from the outside by activating them which, as well, activate the rotation of the screw 311 contained within the stopper 310 and connected to the elastic body 38. The adjustment members of the preload 312 are integrated in the rear stopper 310 of the guide portion 36 which is in turn fixed to the platform 2 by fixing organs 37.

The entire active group 3 is arranged in a horizontal configuration so that the height dimensions of the same are fully contained within the vertical displacement of the platform 2. With respect to the horizontal development and always referring to Fig. 3, the active group 3 extends externally from the profile of the platform 2 only with respect to the dimensions of the rolling bodies 31, of the pulleys 32 and of the support arms 33.

The optimal planar distribution of the active groups 3 with respect to the platform 2, as shown in Figures 1 and 5, is that one in which they are located at least two on the longitudinal left surface, one near the front end and the other near the rear end, and at least two on the right longitudinal surface, one near the front end and the other near the rear end, of the platform 2, in order to avoid unpleasant slippage effects during sliding.

As evident in Fig. 5, the planar arrangement of active groups 3 and passive groups 4 allows the latter to rotate without interfering with the displacement and the position of the first.

At least one by side of the active groups 3 is powered in order to allow the self-propelled apparatus 1 the autonomous forward motion along the rail. The motorized active groups 3 comprise a motor group integral with the sliding portion 34 of the active group 3 and flexible motion transmission organs (not shown), suitable for transmitting motion to the pulley 32.

To a platform 2, as described above, is associated a vision system, 54, for carrying out the inspection of the train underbody.

With reference to Fig. 1, according to the preferred embodiment of the illustrated invention, the vision system 54 is associated with an end of a robotic inspection arm 5 which is bound to slide along a guide, 51, present along the front transverse surface of the platform 2. This robotic arm 5, sensed and articulated to allow the movement and orientation of its end, 53, in the space, has a trolley constraint, 52, of the same robotic arm 5 to the guide 51, to allow the robotic system 5 to slide along it and therefore be able to cover all the transverse extension between the rails of the track. The robotic arm 5 is sensed in order to allow the inspection and the detection of appropriate data from the surrounding space and the subsequent transmission to an external operator.

In particular, the robotic arm 5, preferably of the 6-axis controlled type, supports at the free end 53 the vision system 54 which, thanks to the movement possibility of the robotic arm 5, is able to perform a real three-dimensional scanning of the underbody of a train. Alternatively, or in addition to the vision system 54, additional sensors may be associated with the robotic arm 5, either at the free end 53 or in other parts thereof, such as temperature sensors or otherwise.

A self-propelled apparatus as described above may in particular be used to perform the on-condition inspection and maintenance of the train underbody. In fact, the self-propelled apparatus can move on the rails in the presence of a train and then pass under it so that the robotic arm associated with it can perform the underbody inspection. The movement of the platform and of the robotic arm associated with it as well as the control of the vision system or other associated sensors can be fully automated by the presence of a dedicated and programmable electronics. Alternatively, the inspection operations can be carried out in a non-fully automatic manner by an operator who remotely manages the self-propelled apparatus, with the ability to display real-time images captured by the vision system and any other data detected by additional sensors.

Of course, modifications and variations may be provided to the apparatus for the inspection and the maintenance of the trains underbody described above as an example, but still remaining within the scope of protection provided by the following claims.

## Claims

1. Self-propelled apparatus (1) with sensors for on-condition inspection and maintenance of the underbody of trains movable on a rail track comprising:
- a platform (2) having a maximum transverse dimension, with reference to the forward direction of said rail track, smaller than the size of the gauge of the rails (R) forming said rail track, **characterized in that** the self-propelled apparatus further comprises
- movement organs of said platform (2) arranged for supporting said platform (2) on said rails (R) and allow their sliding therealong, wherein said movement organs include:
- an active group (3) comprising at least four first rolling bodies (31) revolving around a relative rotation axis positioned two per rail to roll on the inner profile of the shank (G) of the rail (R), constrained to said platform (2) by first support arms (33) extending transversely from said platform (2) and arranged to slide with respect to said platform (2) in a direction having a predominant transverse component, at least one by side of said first rolling bodies (31) being motorized,
- a passive group (4) comprising at least four second rolling bodies (44) positioned two per rail to roll on the rail foot (P) via second support arms (41) suitable to support at one end thereof said second rolling bodies (44) in a freely rotatable manner and rigidly constrained at their other end to said platform (2) via connecting organs (45), said active group (3) and said passive group (4) being arranged to support said platform (2) below the rolling surface (S) of the rail and adapted to avoid the interference with fixing members (I) of said rails (R) on a plane (A) even in the presence of trains (C) on said rail tracks.

2. Self-propelled apparatus (1) according to claim 1 **characterized in that** to said platform (2) is associated a vision system (54) suitable to perform the inspection of the underbody of trains.

3. Self-propelled apparatus (1) according to one of the preceding claims, **characterized in that** each of said first support arms (33) extends externally and orthogonally to the longitudinal surfaces of said platform (2), at least two of said first support arms (31) being located near the extreme front of said platform (2), on opposite sides, and at least two of said first support arms (33) being located near the extreme rear of said platform (2), on opposite sides, said first support arms (33) being contained within the vertical dimensions of said platform (2).

4. Self-propelled apparatus (1) according to one of the preceding claims, **characterized in that** each of said first support arms (33) comprises a guide portion (36) integral to said platform (2) and a sliding portion (34) slidably associated to said guide portion (36), between said guide portion (36) and said sliding portion (34) being present at least one elastic body (38) arranged for pressing said sliding portion (34) outwardly of said platform (2), between said guide portion (36) and said elastic body (38) being provided adjustment members of the preload (312) of said elastic body (38).

5. Self-propelled apparatus (1) according to claim 1 **characterized in that** it comprises at least a motor-reduction gear unit associated with at least one of said first rolling bodies (31) of said active group (3) by means of flexible elements for transmission of motion.

6. Self-propelled apparatus (1) according to claim 1 **characterized in that** said second support arms (41) are dimensioned to support the weight of said platform (2) and have a U profile shape with the opening facing downwards.

7. Self-propelled apparatus (1) according to claims 1 and 6 **characterized in that** said connecting organs (45) allow a configuration in which said passive group (4) is integral with said platform (2) to extend transversely and rigidly from it, and a hinge connection configuration to enable the entire said passive group (4) to rotate around a vertical axis and temporarily limit its overall dimensions transverse with respect to the outer profile of said platform (2), so as to facilitate the installation of the platform (2) on a rail.

8. Self-propelled apparatus (1) according to claim 1 **characterized in that** said second rolling bodies (44) are arranged with substantially horizontal axis of rotation with negative camber.

9. Self-propelled apparatus (1) according to claim 2 **characterized in that** to said platform (2) is associated a sensor-fitted robotic arm (5) whom is associated said vision system (54) for the three-dimensional relief of the underbody of trains, said robotic arm (5) being associated to said platform (2) in sliding mode transversely, said robotic arm (5) being adapted to retract in a configuration of non-encumbrance in which it does not protrude upward with respect to said platform (2), in such a way as to allow the passage of said self-propelled apparatus (1) under a train.

10. Self-propelled apparatus (1) according to the preceding claim, **characterized in that** said robotic arm (5) is constrained to slide along a guide (51) fixed horizontally on a transverse side of said platform (2), said guide (51) having the vertical dimension contained within the one of said platform (2).

## Patentansprüche

1. Selbstfahrende Vorrichtung (1) mit Sensoren zur zustandsabhängigen Inspektion und Wartung des Unterbodens von Zügen, die auf einem Schienenstrang bewegt werden, umfassend:
- eine Plattform (2), die eine maximale Querabmessung in Bezug auf die Vorwärtsrichtung des Schienenstrang aufweist, die kleiner ist als die Größe der Spurweite der Schienen (R), die das Schienengleis bilden,
**dadurch gekennzeichnet ist, dass** die selbstfahrende Vorrichtung weiterhin umfasst
- Bewegungsmittel der Plattform (2), die so angeordnet sind, dass sie die Plattform (2) auf den Schienen (R) trägen und ihr Gleiten daran entlang ermöglichen, wobei die Bewegungsmittel umfassen:
- eine aktive Gruppe (3), die mindestens vier erste Rollkörper (31) umfasst, die sich um eine relative Drehachse drehen, wobei zwei pro Schiene positioniert sind, um auf dem Innenprofil des Schafts (G) der Schiene (R) zu rollen, wobei die Rollkörper durch erste Stützarme (33) an der Plattform (2) gehalten werden, die sich quer von der Plattform (2) erstrecken und in Bezug auf die Plattform (2) in einer Richtung gleiten können, die eine vorherrschende Querkomponente aufweist, wobei mindestens eine pro Seit der ersten Rollkörper (31) motorisiert ist,
- eine passive Gruppe (4), die mindestens vier zweite Rollkörper (44) umfasst, von denen zwei pro Schiene positioniert sind, um über zweite Stützarme (41) auf dem Schienenfuß (P) zu rollen, wobei die zweiten Tragarme geeignet sind, die zweiten Rollkörper (44) mit einem Ende frei drehbar zu tragen und die an ihrem anderen Ende über Verbindungsmittel (45) starr mit der Plattform (2) verbunden sind, wobei die aktive Gruppe (3) und die passive Gruppe (4) so angeordnet sind, dass sie die Plattform (2) unterhalb der Rollfläche (S) der Schiene tragen und so angepasst sind, dass sie die Interferenz mit den Befestigungselementen (I) der Schienen (R) auf einer Ebene (A) auch in Anwesenheit von Zügen (C) auf den Schienenwegen vermeiden..

2. Selbstfahrende Vorrichtung (1) nach Anspruch 1, **dadurch gekennzeichnet, dass** der Plattform (2) ein Sichtsystem (54) zugeordnet ist, das geeignet ist, die Inspektion des Unterbodens von Zügen durchzuführen.

3. Selbstfahrende Vorrichtung (1) nach einem der vorhergehenden Ansprüche, **dadurch gekennzeichnet, dass** jeder der ersten Stützarme (33) sich nach außen und orthogonal zu den Längsflächen der Plattform (2) erstreckt, wobei mindestens zwei der ersten Stützarme (31) in der Nähe der äußersten Vorderseite der Plattform (2) auf gegenüberliegenden Seiten angeordnet sind, und wobei mindestens zwei der ersten Stützarme (33) in der Nähe der äußersten Rückseite der Plattform (2) auf gegenüberliegenden Seiten angeordnet sind, sodass die ersten Stützarme (33) innerhalb der vertikalen Abmessungen der Plattform (2) enthalten sind.

4. Selbstfahrende Vorrichtung (1) nach einem der vorhergehenden Ansprüche, **dadurch gekennzeichnet, dass** jeder der ersten Stützarme (33) einen mit der Plattform (2) einstückig verbundenen Führungsabschnitt (36) und einen mit dem Führungsabschnitt (36) gleitend verbundenen Gleitabschnitt (34) aufweist, mit mindestens einem elastischen Körper (38), der zwischen dem Führungsabschnitt (36) und dem Gleitabschnitt (34) angeordnet ist und der angeordnet ist, um den gleitenden Abschnitt (34) von der Plattform (2) nach außen zu drücken, wobei Einstellelemente der Vorspannung (312) des elastischen Körpers (38) zwischen dem Führungsabschnitt (36) und dem elastischen Körper (38) vorgesehen sind.

5. Selbstfahrende Vorrichtung (1) nach Anspruch 1 mindestens eine Motor-Untersetzungsgetriebeeinheit umfasst, die mit mindestens einem der ersten Rollkörper (31) der aktiven Gruppe (3) mittels flexibler Elemente zur Bewegungsübertragung verbunden ist.

6. Selbstfahrende Vorrichtung (1) nach Anspruch 1 **dadurch gekennzeichnet, dass** die zweiten Stützarme (41) so dimensioniert sind, dass sie das Gewicht der Plattform (2) zu tragen und eine U-Profilform aufweisen, wobei die Öffnung nach unten gerichtet ist.

7. Selbstfahrende Vorrichtung (1) nach Ansprüche 1 und 6 **dadurch gekennzeichnet, dass** die Verbindungsmittel (45) eine Konfiguration ermöglichen, in der die passive Gruppe (4) mit der Plattform (2) einstückig ist, so dass sich die passive Gruppe quer und starr von ihr erstreckt und eine Scharnierverbindungskonfiguration, um der gesamten passiven Gruppe (4) zu ermöglichen, sich um eine vertikale Achse zu drehen und ihre Gesamtabmessungen quer zum Außenprofil der Plattform (2) vorübergehend zu begrenzen, um so die Installation der Plattform (2) auf einer Schiene zu erleichtern.

8. Selbstfahrendes Vorrichtung(1) nach Anspruch 1 **dadurch gekennzeichnet, dass** die zweiten Rollkörper (44) mit im wesentlichen horizontaler Drehachse mit negativer Wölbung angeordnet sind.

9. Selbstfahrende Vorrichtung (1) nach Anspruch 2 **dadurch gekennzeichnet, dass** der Plattform (2) ein mit Sensoren ausgestatteter Roboterarm (5) zugeordnet ist, dem das Bildverarbeitungssystem (54) für die dreidimensionale Auswertungsabbildung des Unterbodens von Zügen zugeordnet ist, wobei der Roboterarm (5) mit der Plattform (2) in einem Gleitmodus in Querrichtung verbunden ist, und wobei der Roboterarm (5) so ausgelegt ist, dass er sich in eine Nicht-Last-Konfiguration zurückzieht, in der er in Bezug auf die Plattform (2) nicht nach oben vorsteht, so dass die Durchfahrt der selbstfahrenden Vorrichtung (1) unter einem Zug möglich ist.

10. Selbstfahrende Vorrichtung (1) nach dem vorhergehenden Anspruch, **dadurch gekennzeichnet, dass** der Roboterarm (5) gezwungen ist, entlang einer Führung (51) zu gleiten, die horizontal an einer Querseite der Plattform (2) befestigt ist, wobei die Führung (51) die vertikale Abmessung hat, die innerhalb derjenigen der Plattform (2) enthalten ist.

## Revendications

1. Appareil autopropulsé (1) avec des capteurs pour l'inspection et l'entretien selon l'état du dessous de caisse de trains se déplaçant sur une voie ferroviaire comprenant:
- une plate-forme (2) ayant une dimension transversale maximale, par rapport à la direction avant de ladite voie ferroviaire, inférieure à la taille de l'écartement des rails (R) formant ladite voie ferroviaire,
**caractérisé en ce que** l'appareil autopropulsé comprend en outre
- des moyens de déplacement de ladite plate-forme (2) arrangés pour supporter ladite plate-forme (2) sur lesdits rails (R) et permettre leur glissement le long de ceux-ci, dans lequel lesdits moyens de déplacement comprennent:
- un groupe actif (3) qui comprend au moins quatre premiers corps de roulement (31) qui tournent autour d'un axe de rotation relatif, positionnés deux par rail pour rouler sur le profil intérieur de la tige (G) du rail (R), et qui sont fixés à ladite plate-forme (2) par des premiers bras de support (33) qui s'étendent transversalement depuis ladite plate-forme (2) et peuvent coulisser par rapport à ladite plate-forme (2) dans une direction ayant une composante transversale prédominante, avec au moins un premiers corps roulants (31) de chaque côté étant motorisé,
- un groupe passif (4) comprenant au moins quatre deuxième corps roulants (44) positionnés deux par rail pour rouler sur le pied de rail (P) au moyen de seconds bras de support (41) qui sont adaptés pour supporter lesdits seconds corps de roulement (44) avec une extrémité de manière à pouvoir tourner librement et qui sont rigidement fixés à ladite plate-forme (2) à leur autre extrémité par des moyens de connexion (45), ledit groupe actif (3) et ledit groupe passif (4) étant disposés pour supporter ladite plate-forme (2) sous la surface de roulement (S) du rail et adaptés pour éviter l'interférence avec les éléments de fixation (I) desdits rails (R) sur un plan (A) même en présence de trains (C) sur lesdites voie ferroviaire.

2. Appareil autopropulsé (1) selon la revendication 1, **caractérisé en ce qu'**un système de vision (54) approprié pour effectuer l'inspection du dessous de caisse des trains est associé à ladite plate-forme (2).

3. Appareil autopropulsé (1) selon l'une des revendications précédentes, **caractérisé en ce que** chacun desdits premiers bras de support (33) s'étend extérieurement et orthogonalement aux surfaces longitudinales de ladite plate-forme (2), au moins deux desdits premiers bras de support (31) étant situés près de l'extrémité avant de ladite plate-forme (2), sur des côtés opposés, et au moins deux desdits premiers bras de support (33) étant situés près de l'extrémité arrière de ladite plate-forme (2), sur des côtés opposés, lesdits premiers bras de support (33) étant contenus dans les dimensions verticales de ladite plate-forme (2).

4. Appareil autopropulsé (1) selon l'une des revendications précédentes, **caractérisé en ce que** chacun desdits premiers bras de support (33) comprend une partie de guidage (36) solidaire de ladite plate-forme (2) et une partie coulissante (34) associée de manière coulissante à ladite partie de guidage (36), avec au moins un corps élastique (38) étant situé entre ladite partie de guidage (36) et ladite partie coulissante (34) et disposé pour presser ladite partie coulissante (34) vers l'extérieur de ladite plate-forme (2), des éléments de réglage de la précharge (312) dudit corps élastique (38) étant prévus entre ladite partie de guidage (36) et ledit corps élastique (38).

5. Appareil autopropulsé (1) selon la revendication 1, **caractérisé en ce qu'**il comprend au moins un groupe moto-réducteur associé à au moins un desdits premiers corps roulants (31) dudit groupe actif (3) au moyen d'éléments flexibles pour la transmission du mouvement.

6. Appareil autopropulsé (1) selon la revendication 1, **caractérisé en ce que** lesdits deuxièmes bras de support (41) sont dimensionnés pour supporter le poids de ladite plate-forme (2) et ont une forme de profilé en U avec l'ouverture tournée vers le bas.

7. Appareil autopropulsé (1) selon les revendications 1 et 6, **caractérisé en ce que** lesdits moyens de connexion (45) permettent une configuration dans laquelle ledit groupe passif (4) est solidaire de ladite plate-forme (2) de sorte que le groupe passif s'étend transversalement et rigidement depuis celle-ci, et une configuration de liaison par charnière pour permettre à l'ensemble dudit groupe passif (4) de tourner autour d'un axe vertical et de limiter temporairement son encombrement transversalement par rapport au profil extérieur de ladite plate-forme (2), de manière à faciliter l'installation de la plate-forme (2) sur un rail.

8. Self-propelled apparatus (1) according to claims 1 **caractérisé en ce que** lesdits seconds corps roulants (44) sont disposés avec un axe de rotation sensiblement horizontal avec une cambrure négative.

9. Appareil autopropulsé (1) selon les revendications 2 **caractérisé en ce que** à ladite plate-forme (2) est associé un bras robotisé (5) équipé de capteurs auquel est associé ledit système de vision (54) pour la relevé du dessous de caisse des trains, ledit bras robotique (5) étant associé à ladite plate-forme (2) en mode de glissement transversal, ledit bras robotisé (5) étant adapté pour se rétracter dans une configuration de non-encombrement dans laquelle il ne fait pas saillie vers le haut par rapport à ladite plate-forme (2), de manière à permettre le passage dudit appareil autopropulsé (1) sous un train.

10. Appareil autopropulsé (1) selon la revendication précédente, **caractérisé en ce que** ledit bras robotique (5) est contraint de manière à glisser le long d'un guide (51) fixé horizontalement sur un côté transversal de ladite plate-forme (2), ledit guide (51) ayant la dimension verticale contenue dans celle de ladite plate-forme (2).
